(19) Europäisches Patentamt
European Patent Office
Office européen des brevets

(11) **EP 1 895 637 A2**

(12) **EUROPEAN PATENT APPLICATION**

(43) Date of publication:
**05.03.2008 Bulletin 2008/10**

(51) Int Cl.:
***H02K 1/14*** *(2006.01)*

(21) Application number: **07016046.0**

(22) Date of filing: **16.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **31.08.2006 JP 2006236312**

(71) Applicant: **JTEKT Corporation**
**Osaka-shi**
**Osaka 542-8502 (JP)**

(72) Inventors:
• **Inayama, Hirohide**
**Osaka-shi,**
**Osaka 542-8502 (JP)**

• **Niguchi, Noboru**
**Osaka-shi,**
**Osaka 542-8502 (JP)**
• **Horikawa, Masaru**
**Osaka-shi,**
**Osaka 542-8502 (JP)**
• **Matsubara, Ken**
**Osaka-shi,**
**Osaka 542-8502 (JP)**
• **Kanda, Naotake**
**Osaka-shi,**
**Osaka 542-8502 (JP)**

(74) Representative: **Steil, Christian et al**
**Witte, Weller & Partner**
**Postfach 10 54 62**
**70047 Stuttgart (DE)**

(54) **Electric motor**

(57)    A stator (7) of an electric motor (1) includes a stator core (11) including an annular yoke (14). The stator core (11) includes a plurality of teeth (15) formed on for example, an inner periphery (141) of the yoke (14) and has a coil (13) wound on each of the teeth (15). Each of the teeth (15) includes first and second end portions (151), (152) opposed to each other in a radial direction (R) of the stator core (11). The first end portion (151) is connected to the yoke (14). The second end portion (152) is formed with an axially extending projection (15c) extending in an axial direction (S) of the stator core (11). A coil receiving groove (19) is defined between the axially extending projection (15c) and the yoke (14). The axially extending projection (15c) includes a distal end portion (153) in the axial direction (S), and a root portion (154) adjoining a bottom (19c) of the coil receiving groove (19). In the radial direction (R), a thickness (t2) of the root portion (154) is greater than a thickness (t1) of the distal end portion (153).

FIG. 4A

**Description**

BACKGROUND OF THE INVENTION

Field of the Invention

The present invention relates to an electric motor.

Description of the Related Arts

A stator of the electric motor includes a coil and a stator core having the coil wound thereon. The stator core includes, for example, an annular yoke and a plurality of teeth radially projected from an inner periphery of the yoke. The coil is wound on each of the teeth.

According to Document 1 (Japanese Unexamined Patent Publication No.2004-40948), a groove for receiving the wound coil is formed at ends of the stator core in an axial direction thereof. This groove is formed in each of the teeth and is opened axially outwardly. The groove has an inner wall disposed radially inwardly of the stator core, and an outer wall disposed radially outwardly. The outer wall and the inner wall are formed to have an equal height in the axial direction of the stator core.

According to Document 2 (Japanese Unexamined Patent Publication No. 2006-67789), the outer wall of the groove is formed higher than the inner wall.

According to Document 3 (Japanese Unexamined Patent Publication No.2002-369418), a portion equivalent to the outer wall of the groove is not formed.

By the way, the stator core has a tendency that the magnetic flux density thereof is decreased toward a distal end portion of the inner wall in the axial direction of the stator core. Therefore, the distal end portion of the inner wall does not contribute so much to the increase of torque. However, the thickness of the inner wall in the radial direction of the stator core is at a constant value at any axial position of the stator core. That is, in the axial direction of the stator core, the distal end portion and a root portion of the inner wall have the same dimensions. This results in an increased size or manufacture cost of the stator core.

Hence, an object of the present invention is to provide an electric motor which is adapted to increase output torque and is less costly.

SUMMARY OF THE INVENTION

In accordance with a preferred embodiment of the present invention, there is provided an electric motor comprising: an annular rotor formed with a plurality of magnetic poles arranged circumferentially at intervals; and an annular stator in coaxial relation with the rotor. The stator includes a stator core. The stator core includes an annular yoke having an inner periphery and an outer periphery, and a plurality of teeth projecting from either one of the inner periphery and the outer periphery of the yoke in a radial direction of the stator core. The plural teeth are arranged at intervals in a circumferential direction of the stator core in a manner to define a slot between a respective pair of adjoining teeth. Each of the teeth includes a first end portion and a second end portion opposing each other in the radial direction of the stator core. The first end portion of each tooth is connected to the yoke. The second end portion of each tooth is formed with an axially extending projection extending in an axial direction of the stator core. A coil receiving groove is formed at an end surface of each tooth in the axial direction of the stator core. The coil receiving groove is defined between the axially extending projection and the yoke. The axially extending projection includes a distal end portion disposed relatively outwardly in the axial direction of the stator core, and a root portion disposed relatively inwardly in the axial direction of the stator core and adjoining a bottom of the coil receiving groove. In the radial direction of the stator core, a thickness of the root portion of the axially extending projection is greater than a thickness of the distal end portion of the axially extending projection.

According to the invention, the root portion of the axially extending projection of each tooth has the greater thickness than that of the distal end portion thereof, so that flux saturation at the root portion can be alleviated. This facilitates the passage of magnetic flux through each tooth. Since the distal end portion having a tendency that lower flux density is decreased in the thickness thereof, the reduction of manufacture cost can be achieved by virtue of the reduced material cost.

BRIEF DESCRIPTION OF THE DRAWINGS

FIG.1 is a schematic sectional view showing an electric motor according to a first embodiment of the present invention;

FIG.2 is a sectional view taken on the line II-II in FIG.1 and showing a principal part of a stator;

FIG.3 is a perspective view showing a segment core for forming a stator core;

FIG.4A is a sectional view of the stator core showing a section thereof taken on a line orthogonal to a circumferential direction of the stator core, and

FIG.4B is a sectional view of a principal part of the stator core;

FIG.5 is a graph showing a relation between a value HT=H2/t2 and a cogging torque, determined based on electromagnetic analysis, the value HT=H2/t2 given by dividing a height H2 of an axially extending projection of a tooth by a thickness t2 of a root portion of the axially extending projection in a radial direction of the stator core, the graph plotting the value HT on the abscissa and the magnitude (N·m) of the cogging torque on the ordinate;

FIG.6 is a graph showing a relation between the value HT=H2/t2 and a ratio of magnetic flux density, determined based on electromagnetic analysis, the value HT=H2/t2 given by dividing the height H2 of the axially extending projection of the tooth by the thickness t2 of the root portion of the axially extending projection in the radial direction of the stator core, the graph plotting the value HT on the abscissa and the ratio of magnetic flux density on the ordinate;

FIG.7 is a graph showing a relation between a ratio LW related to the configuration of the stator core and a torque percentage PLW related to an output torque, determined based on electromagnetic analysis, the graph plotting the ratio LW(%) related to the configuration on the abscissa and the torque percentage PLW(%) on the ordinate. Specifically, the graph includes graph lines (X1, X2, X3) showing respective cases where a rotor includes eight magnetic poles, ten magnetic poles and fourteen magnetic poles while a stator includes twelve slots;

FIG.8 is a graph showing a relation between the ratio LW related to the configuration of the stator core and the torque percentage PLW related to the output torque, determined based on electromagnetic analysis, the graph plotting the ratio LW(%) related to the configuration on the abscissa and the torque percentage PLW(%) on the ordinate, the graph including graph lines (X4, S5, S6) showing respective cases where the rotor has six magnetic poles, eight magnetic poles and ten magnetic poles while the stator has nine slots; and

FIG.9 is a perspective view showing a segment core for forming a stator core according to a second embodiment of the invention.

## DETAILED DESCRIPTION OF THE PREFERRED EMBODIMENTS

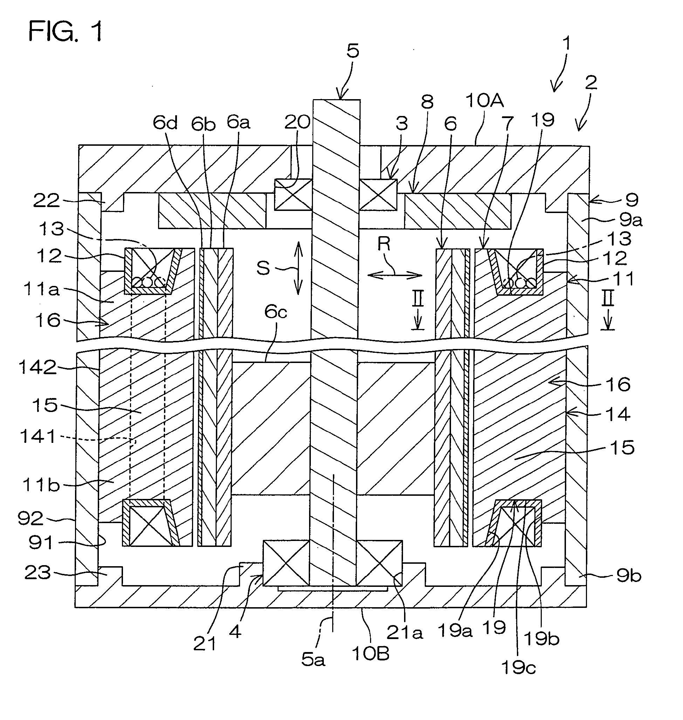

An electric motor according to an embodiment of the present invention will hereinbelow be described in greater details with reference to the accompanying drawings. FIG.1 is a sectional view schematically showing an arrangement of an electric motor according to a first embodiment of the present invention.

The electric motor 1 includes: a motor housing 2 as a frame; a pair of bearings 3, 4 retained by the motor housing 2; an output shaft 5 rotatably supported by the bearings 3, 4; an annular rotor 6 rotatable in unison with the output shaft 5; and an annular stator 7 fixed in the motor housing 2 in a manner to surround the rotor 6. The electric motor 1 is a brushless motor.

The electric motor 1 further includes: a conductive connecting member 8 called bus bar for establishing electrical connection in the electric motor 1; and a rotational position sensor (not shown) for detecting a rotational angular position of the rotor 6. The conductive connecting member 8 may employ, for example, a connecting board used for interconnecting a coil wound on the stator 7 and a current applying line. The rotational position sensor may employ, for example, a resolver or a rotary encoder.

The motor housing 2 includes: a cylindrical housing body 9; and a pair of end members 10A, 10B. The housing body 9 is open at both axial ends 9a, 9b thereof. The ends 9a, 9b of the housing body 9 have the corresponding end members 10A, 10B fixed thereto.

A single member may be used to form integrally the housing body 9 and either one of the end members 10A, 10B as a single component. The following description shows a case where the three members of the housing body 9 and the pair of end members 10A, 10B are separate parts.

The end members 10A, 10B are each shaped like a plate. The end member 10A is formed with a support hole 20 at the center thereof. The bearing 3 is supported by the support hole 20. The end member 10B is formed with a cylindrical projection 21 at the center thereof, an inner periphery 21a of which supports the bearing 4.

The end members 10A, 10B are formed with cylindrical projections 22, 23 as connecting portions for connection with the housing body 9, respectively. The cylindrical projections 22, 23 are fitted in the corresponding ends of the housing body 9, respectively.

The cylindrical housing body 9 has an inner periphery 91 and an outer periphery 92. The axial ends 9a, 9b of the housing body and the corresponding end members 10A, 10B are fixed to each other by means of unillustrated bolts.

The motor housing 2 houses therein the rotor 6, the stator 7 and the conductive connecting member 8. The stator 7 includes: a single stator core 11 of an annular shape; a plurality of insulators 12; and a plurality of coils 13.

The stator core 11 includes: a single yoke 14 of an annular shape, having an inner periphery 141 and an outer periphery 142; and a plurality of teeth 15 projected inwardly from the inner periphery 141 of the yoke 14 in a radial direction R of the stator core 11.

The yoke 14 of the stator core 11 has its outer periphery 142 fixed to the inner periphery 91 of the housing body 9 of the motor housing 2. The stator core 11 and the rotor 6 are opposed to each other in the radial direction R of the stator core 11. The motor housing 2, the output shaft 5, the rotor 6, the stator 7 and the like constitute the brushless motor.

The inner periphery 91 of the housing body 9 of the motor housing 2, an outer periphery of the rotor 6, and a radially inner end (equivalent to an inner end of each tooth 15) and an outer periphery (equivalent to the outer periphery 142 of the yoke 14) of the stator core 11 are coaxially aligned with a center axis 5a of the output shaft 5. The output shaft 5 and the rotor 6 are together rotated about the center axis 5a of the output shaft 5.

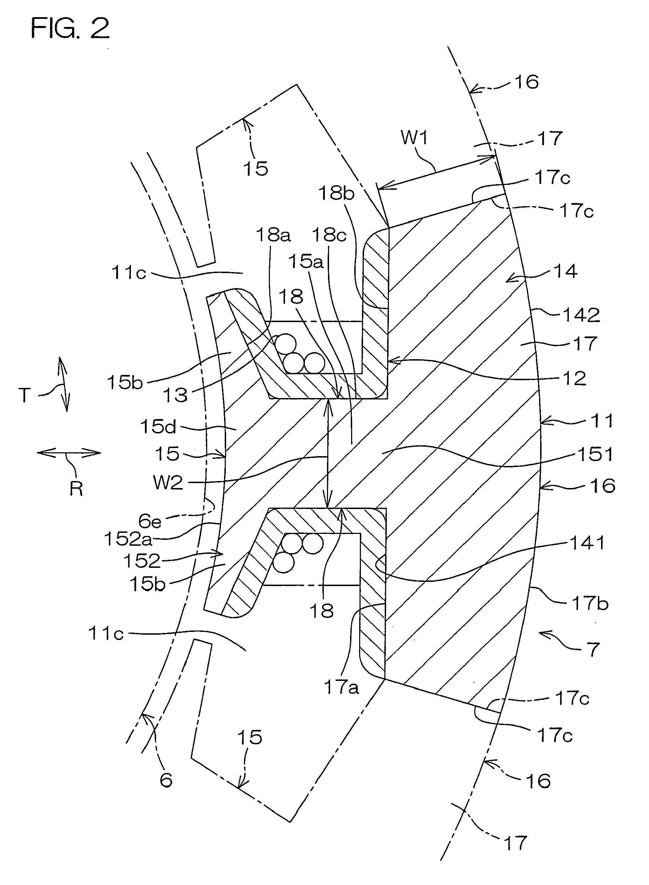

Referring to FIG.1 and FIG.2, the rotor 6 is rotatably supported by the motor housing 2 through the output shaft 5 and the bearings 3, 4. The rotor 6 includes: an annular rotor body 6a; a rotor magnet 6b; a spacer 6c; and a cylindrical protecting member 6d.

The rotor magnet 6b comprises an annular permanent magnet, for example. The rotor magnet 6b has a plurality of magnetic poles 6e arranged circumferentially on an outer periphery thereof at intervals. As the plural magnetic poles 6e, N-poles and S-poles are alternately arranged in the circumferential direction of the rotor magnet 6b.

The rotor body 6a comprises a thin annular member which together rotatably carries the rotor magnet 6b. Thus, the rotor magnet 6b is supported through the rotor body 6a and the spacer 6c in a manner to be rotatable together with the output shaft 5.

An axial length of the rotor body 6a is equal to an axial length of the rotor magnet 6b.

The respective teeth 15 of the stator core 11 are opposed to the outer periphery of the rotor 6 with a predetermined amount of air gap therebetween in the radial direction R of the stator core 11.

The insulator 12 and the coil 13 of the stator 7 are provided at each of the teeth 15. The insulator 12 is an insulating material for protecting the coil 13. Each coil 13 comprises an insulated electric wire.

The stator core 11 has a first end 11a and a second end 11b in an axial direction S thereof. The outer periphery 142 of the yoke 14 as the outer periphery of the stator core 11 constitutes an outer periphery of the stator 7.

As described above, the plural teeth 15 of the stator core 11 are so formed as to project inwardly from the inner periphery 141 of the yoke 14 in the radial direction R of the stator core 11. The plural teeth 15 have the same configuration. The plural teeth 15 are arranged in a circumferential direction T of the stator core 11 at intervals, at regular intervals for example, so as to define slots 11c therebetween.

Each of the teeth 15 has a first end portion 151 and a second end portion 152 opposed to each other in the radial direction R of the stator core 11. The first end portion 151 of each tooth 15 is connected to the inner periphery 141 of the yoke 14. The second end portion 152 of each tooth 15 is in close proximity to the rotor 6 and opposed to the same. The second end portion 152 of each tooth 15 has an end surface 152a formed in a curved surface opposed to the outer periphery of the rotor 6 via the air gap therebetween. That is, the end surface 152a of the second end portion 152 of each tooth 15 constitutes the inner end of the stator core 11 in the radial direction R thereof.

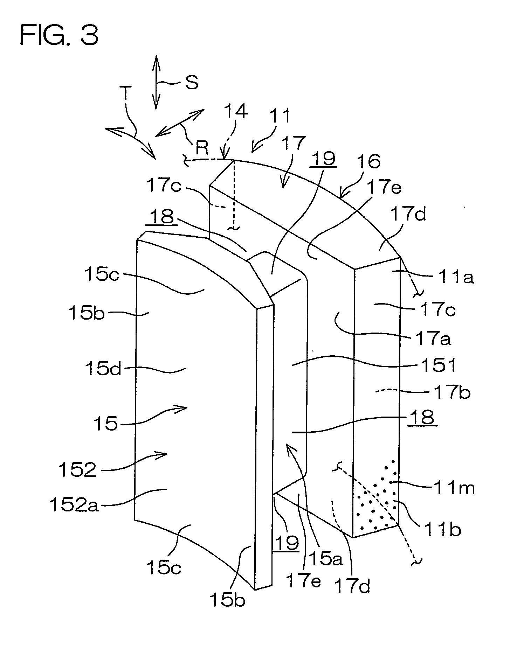

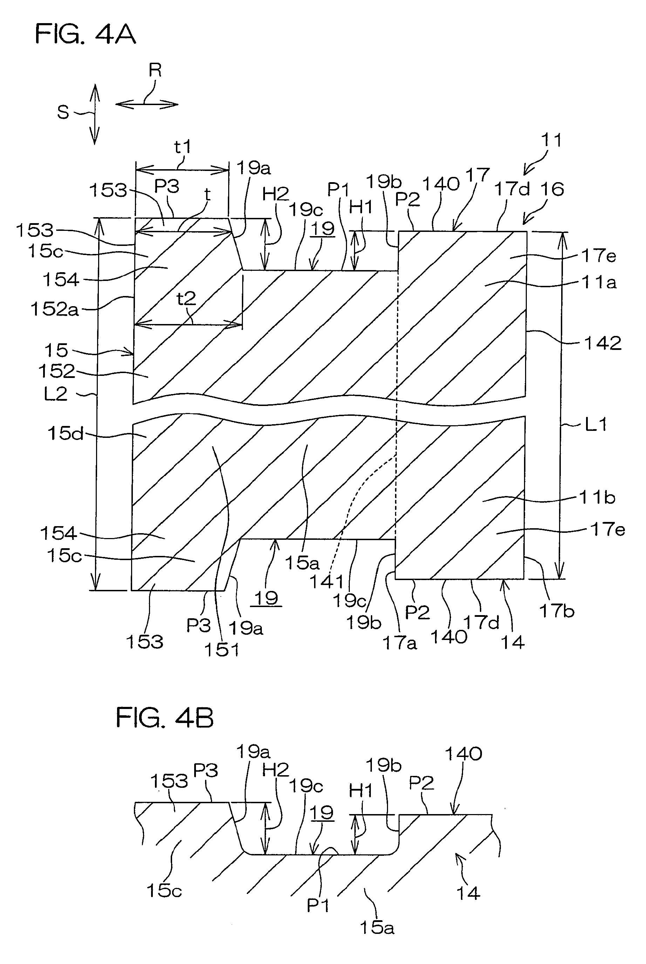

Referring to FIG.3 and FIG.4A, the second end portion 152 of each tooth 15 is formed with an axially extending projection 15c extending in the axial direction S of the stator core 11. A coil receiving groove 19 is formed in an end surface of each tooth 15 in the axial direction S of the stator core 11. The coil receiving groove 19 is defined between the axially extending projection 15c and the yoke 14.

The axially extending projection 15c includes: a distal end portion 153 disposed relatively outwardly in the axial direction S of the stator core 11; and a root portion 154 disposed relatively inwardly in the axial direction S of the stator core 11. The root portion 154 adjoins a groove bottom surface 19c as a bottom of the coil receiving groove 19.

A main feature of the embodiment consists in that in the radial direction R of the stator core 11, a thickness t2 of the root portion 154 of the axially extending projection 15c is greater than a thickness t1 of the distal end portion 153 of the axially extending projection 15c, as shown in FIG.4A.

Specifically, a thickness t of the axially extending projection 15c in the radial direction R of the stator core 11 is progressively decreased from the thickness t2 to the thickness t1 toward an outer side in the axial direction S of the stator core 11.

According to the embodiment, as shown in FIG.2 and FIG.3, the stator core 11 includes a plurality of segment cores 16 as segments segmented in the circumferential direction T. The yoke 14 includes a plurality of yoke segments 17 segmented in the circumferential direction T corresponding to the plural segment cores 16.

The plural segment cores 16 are formed by dividing the stator core 11 longitudinally. Referring to FIG.3, the annular stator core 11 is constructed by combining the plural segment cores 16 annularly. As shown in FIG.1, for example, the plural segment cores 16 arranged annularly may be collectively press-fitted in the inner periphery 91 of the housing body 9, for example, and fixed therein.

Alternatively, an adhesive may be provided between the outer periphery 142 of the yoke 14 of the stator core 11 formed by the plural segment cores 16 arranged annularly and the inner periphery 91 of the housing body 9, whereby the plural segment cores 16 are fixed in the housing body 9. Thus, the plural segment cores 16 are combined with each other to form the annular shape.

Referring to FIG.2 and FIG.3, each of the segment cores 16 includes a single yoke segment 17 and a single tooth 15. The tooth 15 and the yoke segment 17 are integrally formed, thus constituting a single item. The whole body of each segment core 16 comprises a powder magnetic core of a sintered compact containing magnetic particles 11m (schematically shown in the figure).

The yoke segment 17 includes: a portion 17a for forming a part of the inner periphery 141 of the yoke 14; a portion 17b for forming a part of the outer periphery 142 of the yoke 14; a pair of lateral side surfaces 17c as opposite sides in the circumferential direction T; and a pair of opposite end surfaces 17d in the axial direction S. The corresponding tooth 15 is connected to the aforesaid portion 17a of the yoke segment 17.

Each of the teeth 15 includes a tooth body 15a, and a circumferentially extending projection 15b and the axially extending projection 15c as projecting portions.

As seen in the axial direction S of the stator core 11, the tooth body 15a extends from the aforesaid portion 17a of the yoke segment 17 in the radial direction R of the stator core 11. As compared with the yoke segment 17, the tooth body 15a is formed relatively narrower in the circumferential direction T and the axial direction S of the stator core 11. The tooth body 15a extends in parallel to the axial direction S.

The circumferentially extending projection 15b and the axially extending projection 15c are provided at an inner-side end portion 15d in the radial direction R, as an extension end of the tooth body 15a. In other words, the circumferentially extending projection 15b and the axially extending projection 15c are provided at the second end portion 152 of the tooth 15. The circumferentially extending projection 15b and the axially extending projection 15c are connected with each other to surround the tooth body 15a in a form of flange.

The circumferentially extending projection 15b projects from the end portion 15d of the tooth body 15a in the opposite sides of the circumferential direction T of the stator core 11. The circumferentially extending projection 15b is so formed as to be progressively decreased in thickness (radial dimension) as it becomes farther from the tooth body 15a in the circumferential directions T of the stator core 11.

Referring to FIG.3 and FIG.4, the axially extending projection 15c projects from the end portion 15d of the tooth body 15a in the opposite sides of the axial direction S of the stator core 11. The axially extending projection 15c is so formed as to be progressively decreased in thickness (radial dimension) as it becomes farther away from the tooth body 15a in the axial directions S of the stator core 11.

Referring to FIG.1 and FIG.2, the coil 13 is wound on each tooth 15 of the stator core 11 via the insulator 12. Each tooth 15 is formed with coil receiving grooves 18, 19 for receiving the wound coil 13. Specifically, each tooth 15 has a pair of coil receiving grooves 18 for coil winding, which are disposed on the opposite sides of the tooth 15 in the circumferential direction T of the stator core 11 (see FIG.3).

Further, each tooth 15 includes a pair of coil receiving grooves 19 for coil winding, which are disposed on the opposite sides of the tooth 15 in the axial direction S of the stator 7. These coil receiving grooves 18, 19 surround the tooth 15 annularly and are communicated with each other.

The pair of coil receiving grooves 18 are opened in the opposite ways with each other in the circumferential direction T of the stator core 11. Each coil receiving groove 18 defines a part of the slot 11c. The coil receiving groove 18 includes the following portions constituting an inside surface thereof, which include an inner wall surface 18a, an outer wall surface 18b and a groove bottom surface 18c.

The inner wall surface 18a is disposed relatively inwardly in the radial direction R and is formed on the corresponding circumferentially extending projection 15b of the tooth 15. The outer wall surface 18b is disposed relatively outwardly in the radial direction R and is formed on a corresponding circumferential end portion of the yoke segment 17. The inner wall surface 18a and the outer wall surface 18b are opposed to each other in the radial direction R of the stator core 11.

The groove bottom surface 18c of the coil receiving groove 18 is formed on the tooth body 15a. The amount of projection of the circumferentially extending projection 15b of the tooth 15 from the tooth body 15a is designed to be a constant value at any points in the axial direction S.

The pair of coil receiving grooves 19 are opened to the opposite sides outward in the axial direction S of the stator core 11. Each coil receiving groove 19 includes an inner wall disposed relatively inwardly in the radial direction R of the stator core 11, an outer wall disposed relatively outwardly in the radial direction R, and a groove bottom connecting the inner wall and the outer wall. The inner wall and the outer wall are opposed to each other in the radial direction R. Each coil receiving groove 19 includes the following portions constituting an inside surface thereof, which include an inner wall surface 19a, an outer wall surface 19b and the groove bottom surface 19c.

Referring to FIG.3 and FIG.4A, the inner wall of each coil receiving groove 19 is constituted by the corresponding axially extending projection 15c of the tooth 15, which projects outwardly in the axial direction S. The outer wall of each coil receiving groove 19 is constituted by a corresponding axial end 17e of each yoke segment 17 of the yoke 14. The groove bottom of each coil receiving groove 19 is constituted by an axial end of the tooth body 15a.

The inner wall surface 19a is a surface of the axially extending projection 15c of the tooth 15, the surface facing the inside of the coil receiving groove 19. The inner wall surface 19a extends and inclines in the axial direction S of the stator core 11 and is oriented outwardly in the axial direction S of the stator core 11. The outer wall surface 19b is a surface of the axial end 17e of the yoke segment 17, the surface facing the inside of the coil receiving groove 19. The outer wall surface 19b extends in parallel to the axial direction S of the stator core 11. The groove bottom surface 19c is constituted by a surface of an end portion of the tooth body 15a in the axial direction S.

The opposite end portions of the segment core 16 in the axial direction S are formed in the same shape except that these portions are oriented in the opposite sides of the axial direction S. Similarly, the pair of coil receiving grooves 19 are also formed in the same shape.

The stator core 11 according to the embodiment has the following features A, B, C, D and E. The embodiment is described by way of example where an angled ridge and a corner of the segment core 16 are not chamfered into a flat surface or a curved surface. However, the embodiment may also be applied to a case where the angled ridge and corner of the segment core are chamfered.

Feature A

Referring to FIG.4A, the embodiment is constituted such that a height H1 of an axial end surface 140 of the yoke 14 as the outer wall, determined based on the groove bottom surface 19c of the coil receiving groove 19, has a smaller value than that of a height H2 of the distal end portion 153 of the axially extending projection 15c as the inner wall, determined based on the groove bottom surface 19c (0<H1<H2).

Specifically, it is assumed that a curved portion is provided between the groove bottom surface 19c and the inner wall surface 19a and between the groove bottom surface 19c and the outer wall surface 19b, as shown in FIG.4B. In this case, a section orthogonal to the circumferential direction T of the stator core 11 and passing through the centroid position of the tooth 15, the height H1 of the outer wall is a distance in the axial direction S of the stator core 11. Namely, the height H1 is the distance between an innermost portion P1 of the groove bottom surface 19c in the axial direction S and an axially outermost portion P2 of the axial end surface 140 of the yoke 14 as the outer wall.

In the section orthogonal to the circumferential direction T of the stator core 11 and passing through the centroid position of the tooth 15, the height H2 of the inner wall is a distance in the axial direction S of the stator core 11. Namely, the height H2 is the distance between the innermost portion P1 of the groove bottom surface 19c in the axial direction S and an axially outermost portion P3 of the distal end portion 153 of the axially extending projection 15c as the inner wall.

Feature B

The embodiment is constituted such that a length L1 of the yoke 14 is shorter than the maximum length L2 of the tooth 15, in the axial direction S of the stator core 11 (L1<L2).

It is noted here that the length L1 of the yoke 14 is a distance in the axial direction S. Namely, the length L1 is the distance between the axially outermost portion of the yoke 14, which is located at the first end 11a of the stator core 11, and the axially outermost portion of the yoke 14, which is located at the second end 11b of the stator core 11.

The maximum length L2 of the tooth 15 is a distance in the axial direction S. Namely, the maximum length L2 is the distance between the axially outermost portion of the axially extending projection 15c of the tooth 15, which is located at the first end 11a of the stator core 11, and the axially outermost portion of the axially extending projection 15c of the tooth 15, which is located at the second end 11b of the stator core 11.

Feature C

The embodiment is constituted such that the thickness t1 of the distal end portion 153 of the axially extending projection 15c as the inner wall is smaller than the thickness t2 of the root portion 154 of the axially extending projection 15c in the radial direction R (t1<t2).

In the section orthogonal to the circumferential direction T of the stator core 11 and passing through the centroid position of the tooth 15, the above thicknesses t1, t2 are distances in the radial direction R between the inner wall surface 19a and the end surface 152a as the opposite surface of the axially extending projection 15c opposed to the rotor 6, at corresponding axial positions.

In the case where the angled ridge and corner of the segment core 16 are chamfered, the inner wall surface 19a and the end surface 152a, which decide the aforementioned thicknesses t1, t2, may include the chamfered portion formed at the edge of the surface or may exclude the chamfered portion.

Feature D

According to the embodiment, the axially extending projection 15c as the inner wall is designed as follows. First, let us consider a value (H2/t2) (hereinafter, also referred to as value HT) given by dividing the height H2 of the inner wall (the axially extending projection 15c) of the coil receiving groove 19 in the axial direction S of the stator core 11 by the thickness t2 of the root portion 154 of the inner wall (the axially extending projection 15c) in the radial direction R of the stator core 11.

The value HT is set in the range defined as $0 < Ht \leq 0.5$. This constitution is favorably effective at reducing cogging torque.

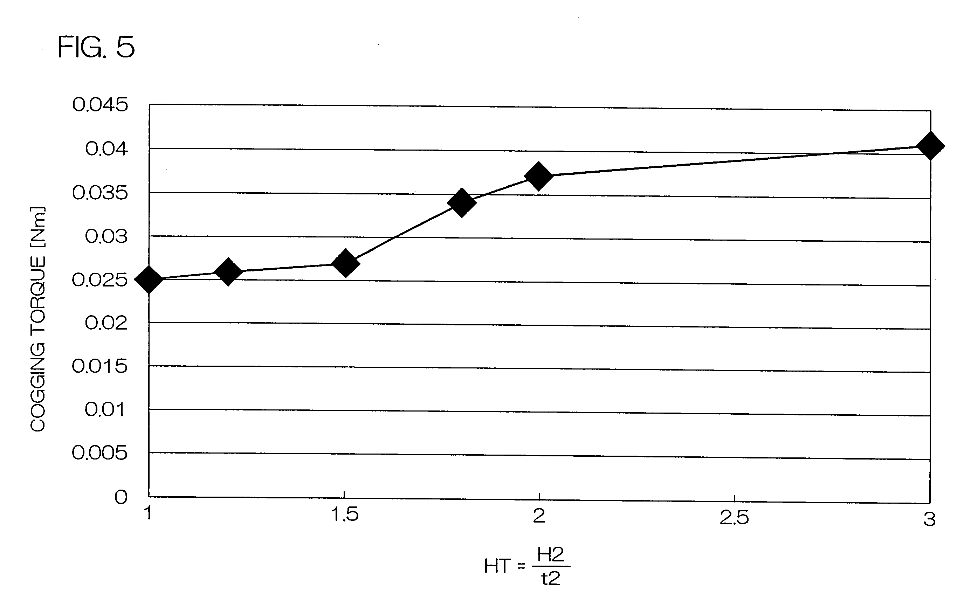

FIG.5 is a graph showing a relation between the aforesaid value HT and the cogging torque, determined based on electromagnetic analysis. In the graph, the abscissa is the value HT and the ordinate is the magnitude (N·m) of the cogging torque. The graph in FIG. 5 is obtained by determining a cogging torque against each different value of the above value HT in a predetermined analytical model and plotting each value HT and the corresponding cogging torque.

Referring to FIG.5, the increasing rate of the cogging torque relative to the value HT (the slope of the graph line) increases if the value HT is increased beyond 1.5. In a case where the value HT is 1.5 or less, the cogging torque substantially stays at the same level as compared with a cogging torque plotted against a value HT of 1. It is therefore preferred to set the value HT to be 1.5 or less.

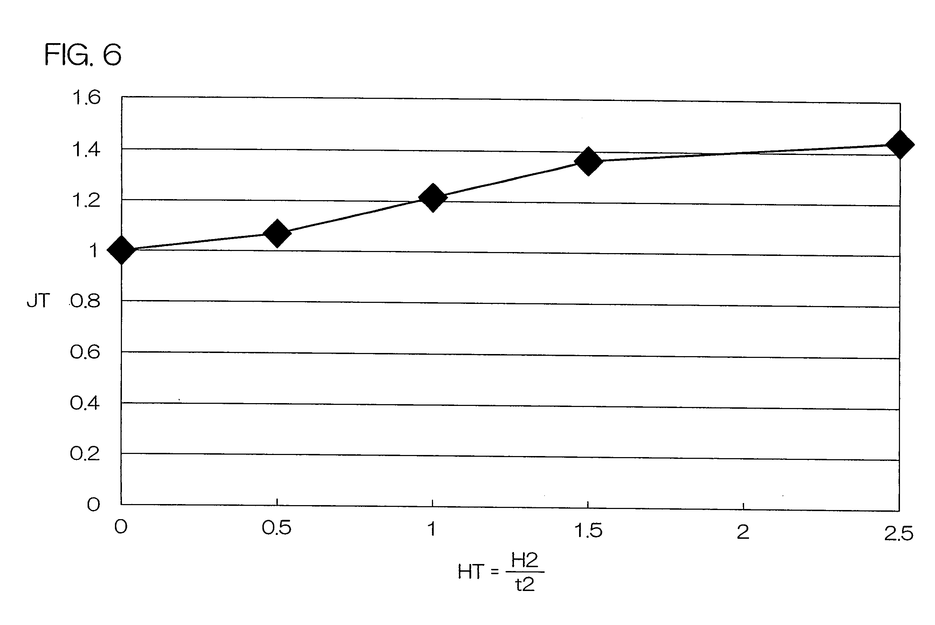

FIG.6 is a graph showing a relation between the aforesaid value HT=H2/t2 and the ratio of a magnetic flux density JT described later, based on the results of electromagnetic analysis. The graph plots the value HT on the abscissa and the ratio of magnetic flux density JT on the ordinate. It is noted here that the ratio of magnetic flux density JT is a ratio of a magnetic flux density J2 against a magnetic flux density J1, the magnetic flux density J2 determined at the root portion 154 of the axially extending projection 15c at the second end portion 152 of the tooth 15, the magnetic flux density J1 determined at the center of the second end portion 152 of the tooth 15 in the axial direction S. That is, JT=J2/J1.

The graph of FIG.6 is obtained by determining a ratio of magnetic flux density JT corresponding to each different value of the above value HT in a predetermined analytical model and plotting the values HT and the corresponding values of ratio of magnetic flux density JT.

Referring to FIG. 6, the increasing rate of the ratio of magnetic flux density JT corresponding to the value HT (the slope of the graph line) increases in a case where the value HT is increased beyond 0.5. In a case where the value HT is 0.5 or less, the ratio of magnetic flux density JT is 1.1 or less or substantially stays at the same level as compared with a ratio of magnetic flux density plotted against a value HT of 1. It is therefore preferred to set the value HT to be greater than 0 and 0.5 or less.

Feature E

Referring to FIG.2 and FIG.4, the embodiment is constituted, for example, such that the number of slots 11c is twelve and the number of magnetic poles 6e is eight. That is, the number of slots 11c is greater than the number of magnetic poles 6e.

In this case, the length L1 of the yoke 14 in the axial direction S of the stator core 11, a minimum width W1 of the yoke 14 in the radial direction R of the stator core 11, the maximum length L2 of the tooth 15 in the axial direction S of the stator core 11, and a minimum width W2 of the tooth 15 in the circumferential direction T of the stator core 11 are so defined as to satisfy the following expression (1). This can accomplish the prevention of decreased output torque of the electric motor 1 and the downsizing of the yoke 14.

$$(L1 \cdot W1) > (0.6 \cdot L2 \cdot W2) \ \dots \ (1)$$

The relation defined by the above expression (1) is also applicable to a case where the combination of the number of magnetic poles 6e of the rotor 6 and the number of slots 11c of the stator core 11 is other than that exemplified by the embodiment. Specifically, the relation defined by the expression (1) may preferably be applied to a case where the number of slots 11c is greater than the number of magnetic poles 6e.

The following expression (2) is preferably applied to a case where the number of slots 11c is smaller than the number of magnetic poles 6e:

$$(L1 \cdot W1) > (0.4 \cdot L2 \cdot W2) \ \dots \ (2)$$

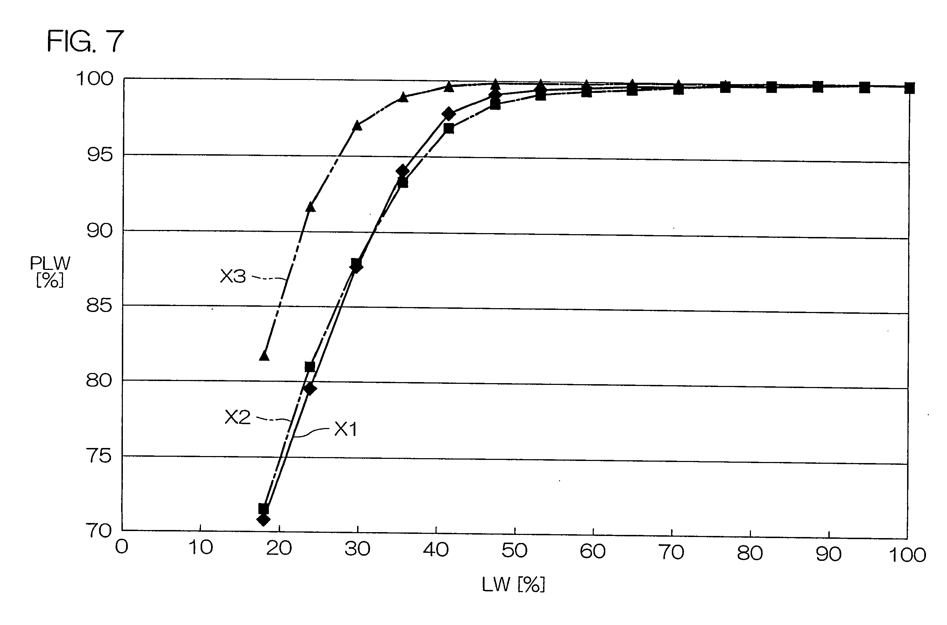

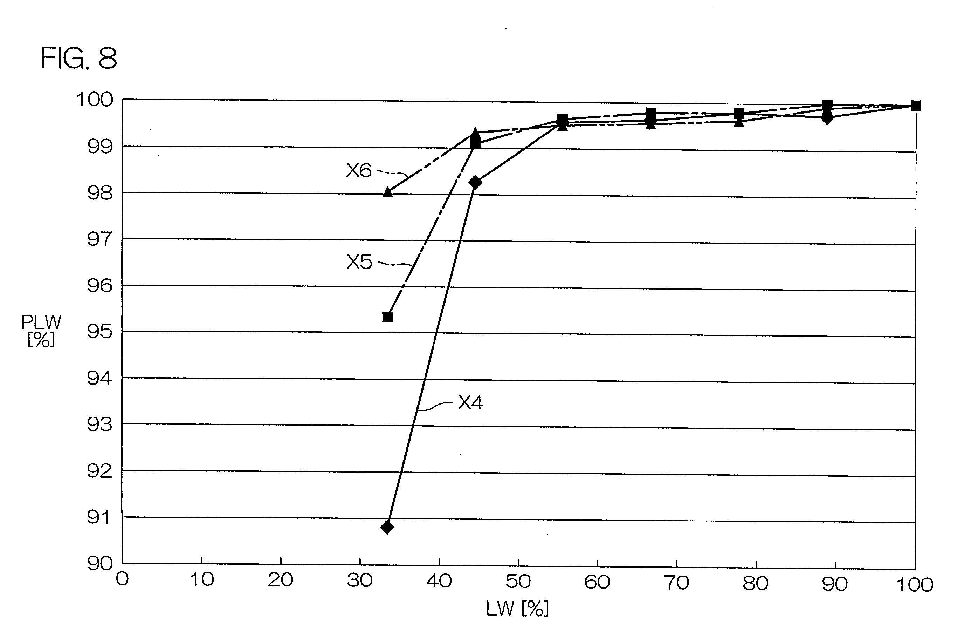

FIG.7 and FIG.8 are graphs each showing the variations of the output torque in conjunction with the variations of the configuration of the stator core 11, based on the result of electromagnetic analysis. In FIG.7 and FIG.8, a ratio LW(%) related to the configuration to be described hereinlater, as the value representing the configuration of the stator core 11, is plotted on the abscissa. A torque percentage PLW(%) to be described hereinlater, as the value representing the output torque, is plotted on the ordinate.

The ratio LW(%) related to the configuration is calculated based on the following equation (3):

$$\text{LW} (\%) = 100 \cdot [(\text{L1} \cdot \text{W1}) / (\text{L2} \cdot \text{W2})] \quad ... \quad (3)$$

Specifically, there are calculated a product (L1·W1) of the above values L1, W1 as the values representing the dimensions of the yoke 14 and a product (L2·W2) of the above values L2, W2 as the values representing the dimensions of the tooth 15. A ratio of the above product (L1·W1) against the above product (L2·W2) is calculated on percentage. The ratio is defined as the ratio LW (%) related to the configuration.

The torque percentage PLW(%) is calculated based on the following equation (4):

$$\text{PLW} (\%) = 100 \cdot [\text{PX} / \text{P100}] \quad ... \quad (4)$$

In the above equation, PX denotes the output torque obtained when the ratio LW related to the configuration is at a predetermined value, whereas P100 denotes the output torque obtained when the ratio LW related to the configuration is at 100%. A ratio of the output torque PX against the output torque P100 is calculated on percentage. The ratio is defined as the torque percentage PLW (%).

FIG.7 includes a graph line showing a case where the rotor 6 includes eight magnetic poles 6e (indicated by a solid line X1 connecting diamond-shaped dots), a graph line showing a case where the rotor 6 includes ten magnetic poles 6e (indicated by a dot-dash line X2 connecting square dots) and a graph line showing a case where the rotor 6 includes fourteen magnetic poles 6e (indicated by a chain double-dashed line X3 connecting triangular dots), when the stator 7 includes twelve slots 11c.

FIG.8 includes a graph line showing a case where the rotor 6 includes six magnetic poles 6e (indicated by a solid line X4 connecting diamond-shaped dots), a graph line showing a case where the rotor 6 includes eight magnetic poles 6e (indicated by a dot-dash line X5 connecting square dots) and a graph line showing a case where the rotor 6 includes ten magnetic poles 6e (indicated by a chain double-dashed line X6 connecting triangular dots), when the stator 7 includes nine slots 11c.

Referring to FIG.7 and FIG.8, in a case where the number of slots 11c is greater than the number of magnetic poles 6e (in each case of the graph lines X1, X2, X4, X5), the slope of the graph line increases if the ratio LW related to the configuration is decreased below 50%. Namely, the output torque is decreased significantly. It is understood that the reduction quantity of the torque percentage PLW (equivalent to the reduction ratio of output torque) can be controlled to below 1% by ensuring the ratio LW related to the configuration at 60% or more.

In a case where the number of slots 11c is smaller than the number of magnetic poles 6e (in each case of the graph lines X3, X6), the reduction of the output torque in conjunction with the variations of the ratio LW related to the configuration is suppressed as compared with the case where the number of slots 11c is greater than the number of magnetic poles 6e (in each case of the graph lines X1, X2, X4, X5). If the ratio LW related to the configuration is decreased below 40%, the slope of the graph increases and the output torque is decreased significantly. It is understood that the reduction ratio of the output torque can be controlled below 1% by ensuring the ratio LW related to the configuration at 40% or more.

It is also possible to calculate the minimum width W1 of the yoke 14 based on the expressions (1) and (2). The adoption of the minimum width W1 contributes to the reduction of a material cost of the yoke 14.

In the case where the number of slots 11c is greater than the number of magnetic poles 6e, therefore, the expression (1) is satisfied, whereby the reduction of the output torque can be suppressed while the ratio LW related to the configuration can be reduced based on the expression (1). That is, the yoke 14 can be downsized.

In the case where the number of slots 11c is smaller than the number of magnetic poles 6e, on the other hand, the expression (2) is satisfied, whereby the reduction of the output torque can be suppressed while the ratio LW related to the configuration can be reduced based on the expression (2). That is, the yoke 14 can be downsized.

According to the embodiment, the thickness t2 of the root portion 154 of the axially extending projection 15c, as the inner wall is greater than the thickness t1 of the distal end portion 153 of the axially extending projection 15c, in the radial direction R of the stator core 11. The constitution can alleviate the flux saturation at the root portion to facilitate the passage of magnetic flux through the tooth 15. Since the distal end portion 153 having a tendency that lower flux density has the smaller thickness t1, the reduction of manufacture cost can be achieved by virtue of the reduced material cost.

According to the embodiment, the height H1 of the outer wall of the coil receiving groove 19 is smaller than the height H2 of the inner wall of the coil receiving groove 19, in the axial direction S of the stator core 11. In this case, the outer wall of the coil receiving groove 19 can become properly permeable to the magnetic flux. What is more, the outer wall has the smaller height than the inner wall and hence, the reduction of manufacture cost may be achieved by virtue of the reduced material cost.

According to the embodiment, the value (H2/t2) is in the range of 0<(H2/t2)≤0.5, the value (H2/t2) given by dividing the height H2 of the axially extending projection 15c as the inner wall of the coil receiving groove 19 in the axial direction S of the stator core 11 by the thickness t2 of the root portion 154 of the axially extending projection 15c in the radial direction R of the stator core 11. In this case, the embodiment can offer a notable effect to facilitate the passage of the magnetic flux through the axially extending projection 15c and to reduce the material cost of the axially extending projection 15c.

According to the embodiment, the length L1 of the yoke 1 is smaller than the maximum length L2 of the tooth 15, in the axial direction S of the stator core 11. In this case, the embodiment can assuredly offer an effect to facilitate the passage of the magnetic flux through the yoke 14 and to reduce the material cost of the yoke 14.

The embodiment is adapted to satisfy the aforementioned expression (1) in the case where the number of slots 11c is greater than the number of magnetic poles 6e of the rotor 6. In this case, the embodiment can assuredly offer the effect to facilitate the passage of magnetic flux and to reduce the material cost.

The embodiment may also be adapted to satisfy the aforementioned expression (2) instead of the expression (1) if the number of slots 11c is smaller than the number of magnetic poles 6e. In this case, the embodiment can assuredly offer the effect to facilitate the passage of magnetic flux and to reduce the material cost.

In a case where the electric motor 1 has at least one of the following features F1, F2, F3, the electric motor may adopt at least one, or preferably all, of the above features A, B, C, D and E.

Feature F1: The permanent magnet of the rotor magnet 6b comprises a neodymium magnet. The neodymium magnet is a rare-earth magnet which mainly contains neodymium, iron and boron.

Feature F2: The distance between the inner periphery of the stator 7 and the outer periphery of the protecting member 6d of the rotor 6, in the radial direction R, is 0.5mm or less.

Feature F3: The compact of magnetic particles 11m (equivalent to, for example, the powder magnetic core of sintered compact according to the embodiment) has a density of 7.5g/cm$^3$ or more.

In a case where the electric motor 1 has the above features F1, F2 and F3, the stator core 11 tends to be increased in the magnetic flux density. In such a case, at least one of the aforementioned features A, B, C, D and E may be applied, or preferably all the above features may be applied, to the electric motor, whereby the stator core 11 can become more permeable to the magnetic flux. As a result, the inexpensive electric motor 1, which is increased in the output torque, can be realized.

The following modification may be employed in the embodiment. The following description focuses on difference from the above embodiment. Like parts are represented by the same reference characters, the description of which is dispensed with.

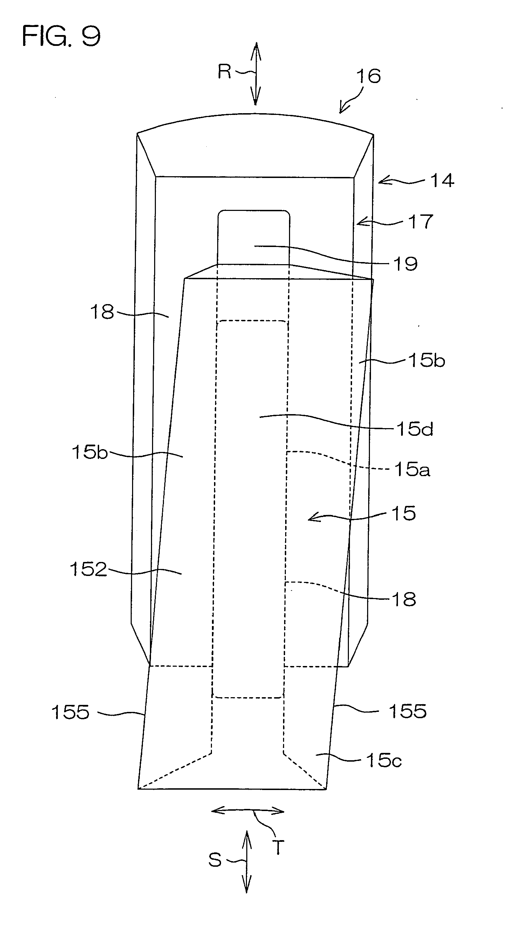

FIG.9 is a perspective view showing a segment core of a stator core according to a second embodiment of the invention. Referring to FIG.9, the tooth 15 of the segment core 16 is skewed only at the distal end portion located radially inwardly. Specifically, the second end portion 152 of the tooth 15 includes an end portion 15d of the radially inward tooth body 15a, the circumferentially extending projections 15b and the axially extending projection 15c.

The amount of projection of the circumferentially extending projection 15b from the tooth body 15a varies depending upon the position in the axial direction S of the stator core 11. For instance, the amount of projection of the circumferentially extending projection 15b projecting toward one side in the circumferential direction T of the stator core 11 is progressively increased toward one end in the axial direction S. On the other hand, the amount of projection of the circumferentially extending projection 15b projecting toward the other side in the circumferential direction T is progressively increased toward the other end in the axial direction S.

An edge portion 155 located at a distal end of the circumferentially extending projection 15b in the circumferential direction extends linearly and inclines relative to the axial direction S. A distance between a pair of the distal edge portions 155 of the circumferentially extending projection 15b of the tooth 15 in the circumferential direction T is constant at any position in the axial direction S.

In this case, the tooth body 15a extends in parallel to the axial direction S and hence, it is easier to wind coil on the tooth body 15a as compared with the case where the tooth body 15a is inclined relative to the axial direction S. As compared with a case where the skew is provided by devising the layout of the magnets of the rotor magnet 6b of the rotor 6, skew is provided more easily. Moreover, effective reduction of cogging torque can be achieved. High-precision press molding may impart the skew to the tooth 15 being molded, so that the skew may be prevented from varying from one stator 7 to another.

The segment core 16 shown in FIG.9 may also be applied to the stator core 11 which is not formed with the coil receiving groove 19 and which contains the magnetic particles 11m. This segment core 16 is applicable not only to the brushless motor but also to an electric motor with brush.

The foregoing embodiments may include at least one of the cases where the expression (1) or (2) is not satisfied, where the length of the yoke 14 is equal to or greater than the maximum length of the tooth 15, where (H2/t2)>0, and where t1≥t2.

According to the foregoing embodiments, in the coil receiving grooves 19 at the opposite ends 11a, 11b of the stator core 11 in the axial direction S thereof, the axially extending projection 15c as the inner wall is formed in the greater height than that of the yoke 14 as the outer wall. However, the invention is not limited to this. An alternative constitution may also be contemplated wherein only the coil receiving groove 19 disposed at either one of the ends 11a, 11b has the inner wall higher than the outer wall. This can also provide a partial effect to increase the output torque at low cost.

The following manufacture method may be used for manufacturing the powder magnetic core for forming the stator core 11 of the foregoing embodiments. The method includes the steps of: coating the magnetic particles with an electrically insulative binder component; filling the particles coated with the binder component in a mold; and compression-molding the particles for forming a compact having a predetermined configuration. The resultant compact is heat-treated for curing the binder component. Thus the powder magnetic core is obtained.

Examples of the above magnetic particles include soft magnetic powders such as iron powder, ferrite powder, sendust powder, permalloy powder and permendur poweder. Examples of the binder component include silicone resins.

While the stator core 11 according to the foregoing embodiments comprises only the powder magnetic core, the stator core may also comprise a powder magnetic core and magnetic steel sheet laminates. Specifically, the stator core may sometimes have axially opposite ends formed of the powder magnetic core and an axially intermediate portion formed of the magnetic steel sheet laminated.

While the stator core 11 of the foregoing embodiments is formed by annularly combining the plural segment cores 16, the invention is not limited to this. For instance, the stator core may be formed from a single material into one piece.

While the invention has been described in greater details with reference to the specific embodiments thereof, it is to be understood that changes, modifications and equivalents will occur to those skilled in the art who have understood the above contents. The scope of the invention, therefore, is defined by the appended claims and their equivalents.

The present application is corresponding to Patent Application No.2006-236312 filed with Japanese Patent Office on August 31, 2006, and the whole disclosure thereof is incorporated herein by reference.

## Claims

1. An electric motor (1) comprising:

   an annular rotor (6) formed with a plurality of magnetic poles (6e) arranged circumferentially at intervals; and
   an annular stator (7) in coaxial relation with the rotor (6),

   wherein the stator (7) includes a stator core (11),
   wherein the stator core (11) includes an annular yoke (14) having an inner periphery (141) and an outer periphery (142), and a plurality of teeth (15) projecting from either one of the inner periphery (141) and the outer periphery (142) of the yoke (14) in a radial direction (R) of the stator core (11),
   wherein the plurality of teeth (15) are arranged in a circumferential direction (T) of the stator core (11) such that a slot (11c) is defined between each pair of adjoining teeth,
   wherein each of the teeth (15) includes a first end portion (151) and a second end portion (152) opposed to each other in the radial direction (R) of the stator core (11),
   wherein the first end portion (151) of each of the teeth (15) is connected to the yoke (14),
   wherein the second end portion (152) of each of the teeth (15) is formed with an axially extending projection (15c) extending in an axial direction (S) of the stator core (11),
   wherein a coil receiving groove (19) is formed at an end surface of each of the teeth (15) in the axial direction (S) of the stator core (11),
   wherein the coil receiving groove (19) is defined between the axially extending projection (15c) and the yoke (14),
   wherein the axially extending projection (15c) includes a distal end portion (153) disposed relatively outwardly in the axial direction (S) of the stator core (11), and a root portion (154) disposed relatively inwardly in the axial direction (S) of the stator core (11) and adjoining a bottom (19c) of the coil receiving groove (19), and
   wherein in the radial direction (R) of the stator core (11), a thickness (t2) of the root portion (154) of the axially extending projection (15c) is greater than a thickness (t1) of the distal end portion (153) of the axially extending projection (15c).

2. An electric motor (1) according to Claim 1,
   wherein a thickness (t) of the axially extending projection (15c) in the radial direction (R) of the stator core (11) is progressively decreased toward an outer side in the axial direction (S) of the stator core (11).

3. An electric motor (1) according to Claim 1 or 2,
   wherein the stator core (11) includes a powder magnetic core.

4. An electric motor (1) according to any one of Claims 1 to 3,
   wherein a height (H1) of an axial end surface (140) of the yoke (14) determined based on the bottom (19c) of the coil receiving groove (19) is smaller than a height (H2) of the distal end portion (153) of the axially extending projection (15c) determined based on the bottom (19c) of the coil receiving groove (19).

5. An electric motor (1) according to Claim 4,
   wherein the following expression is satisfied:
   $0 < (H2/t2) \leq 0.5$,
   where H2 denotes the height of the distal end portion (153) of the axially extending projection (15c) determined based on the bottom (19c) of the coil receiving groove (19), and t2 denotes a thickness of the root portion (154) of the axially extending projection (15c) in the radial direction (R) of the stator core (11) .

6. An electric motor (1) according to any one of Claims 1 to 5,
   wherein a length (L1) of the yoke (14) is smaller than a length (L2) of each of the teeth (15), in the axial direction (S) of the stator core (11).

7. An electric motor (1) according to Claim 6,
   wherein in a case where the number of the slots (11c) of the stator core (11) is greater than the number of the magnetic poles (6e) of the rotor (6), the following expression is satisfied:

$$(L1 \cdot W1) > (0.6 \cdot L2 \cdot W2),$$

   where L1 denotes a length of the yoke (14) in the axial direction (S) of the stator core (11), W1 denotes a minimum width of the yoke (14) in the radial direction (R) of the stator core (11), L2 denotes a maximum length of each of the teeth (15) in the axial direction (S) of the stator core (11), and W2 denotes a minimum width of each of the teeth (15) in the circumferential direction (T) of the stator core (11).

8. An electric motor (1) according to Claim 6,
   wherein in a case where the number of the slots (11c) of the stator core (11) is smaller than the number of the magnetic poles (6e) of the rotor (6), the following expression is satisfied:

$$(L1 \cdot W1) > (0.4 \cdot L2 \cdot W2),$$

   where L1 denotes a length of the yoke (14) in the axial direction (S) of the stator core (11), W1 denotes a minimum width of the yoke (14) in the radial direction (R) of the stator core (11), L2 denotes a maximum length of each of the teeth (15) in the axial direction (S) of the stator core (11), and W2 denotes a minimum width of each of the teeth (15) in the circumferential direction (T) of the stator core (11).

FIG. 1

FIG. 2

# FIG. 3

FIG. 4A

FIG. 4B

# FIG. 5

EP 1 895 637 A2

FIG. 6

The graph shows JT on y-axis and HT = H2/t2 on x-axis.

$$HT = \frac{H2}{t2}$$

FIG. 7

EP 1 895 637 A2

## FIG. 8

EP 1 895 637 A2

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004040948 A
- JP 2006067789 A
- JP 2002369418 A
- JP 2006236312 A